# EUROPEAN PATENT SPECIFICATION

(11) **EP 1 538 824 B1**
(45) Date of publication and mention of the grant of the patent: **28.10.2009**
(21) Application number: 04028716.1
(22) Date of filing: 03.12.2004
(51) Int. Cl.: H04N 1/32

(54) **Color printing apparatus**
Farbdruckvorrichtung
Appareil d'impression couleur

(30) Priority: 05.12.2003 JP 2003407057
(43) Date of publication of application: 08.06.2005
(73) Proprietor: Ricoh Company, Ltd., Tokyo 143-8555 (JP)
(72) Inventor: Yamada, Naoyuki, Ohiso-cho, Naka-gun, Kanagawa-ken (JP)
(74) Representative: Schwabe - Sandmair - Marx

(56) References cited:
- EP-A- 0 705 022
- JP-A- 09 154 010
- US-A- 5 838 883
- US-A- 6 094 282
- US-A1- 2003 007 169
- US-B1- 6 226 095

## Description

### BACKGROUND

### Technical Field

The present invention relates to various printing apparatuses, such as printers, copiers, facsimiles, etc.

### Discussion of the Background Art

A printing apparatus such as a printer generally includes a main controller unit and a printing control unit (e.g. an engine driver). The printing control unit generally prints an image on a recording medium such as a sheet in accordance with image data, which is transmitted from the main controller unit. Japanese Patent Application Laid Open No. 9-314912 discusses such a printing apparatus in which image data of three planes of RGB (i.e., a triple color), or four planes of CMYK (i.e., a quartet color) are simultaneously transferred from the main control unit to the print control unit to print a color image at a high speed. Planes are also referred to hereinafter as plates.

However, to print a color image at a high speed in such a printing apparatus, an image-processing device requires image-processing hardware for the respective four plates. Because, image processing of the respective plates should be simultaneously performed. Further, it is costly, because image data of the four plates, which has undergone image processing, should be stored at once, and accordingly, a memory capable of simultaneously storing the four plates is required. The present invention is made in view of such a problem, and the object thereof is to minimize an undesirable processing interval between printings of pages, in particular, an image data transfer time period, while downsizing hardware of a color image printable printing apparatus.

### SUMMARY

The object of the invention is to print a color image by means of a device which is of substantially the same scale as a device for monochrome image printing.

The aforementioned object is solved by the subject-matter of claim 1. The dependent claims are directed to embodiments of advantage.

Advantageously, a color printing device includes a main control unit formed from a main control device that generally controls the printing apparatus, a first memory device that has a capacity to store at least one page of image data, and a first data transfer device that transfers image data of component colors per a component color plate in turn to a print control unit. The print control unit includes a print control device that controls the print control unit, a second memory that has a capacity to store at least one page of image data, an image processing device that processes the image data, and a storage device that stores the image data having received the image processing.

Advantageously, the image processing device includes a resolution conversion device that converts a resolution of the image data into a prescribed level.

Advantageously, the printing control unit includes a reordering device that reorders the image data before printing.

Advantageously, a print resolution designation device is provided to designate a printing resolution. In a preferred embodiment, a memory capacity calculation device is provided to calculate an amount of image data likely stored in a second memory based upon the resolution. A memory control device is provided to control storage of the image data in the second memory in accordance with a calculation result of the memory capacity calculation device.

Advantageously, a copy number designating device is provided to designate a number of copies. In a preferred embodiment, a second memory control device is provided to read the same image data from the second memory as needed when the copy number designating device designates prescribed plural numbers of copies.

### BRIEF DESCRIPTION OF DRAWING

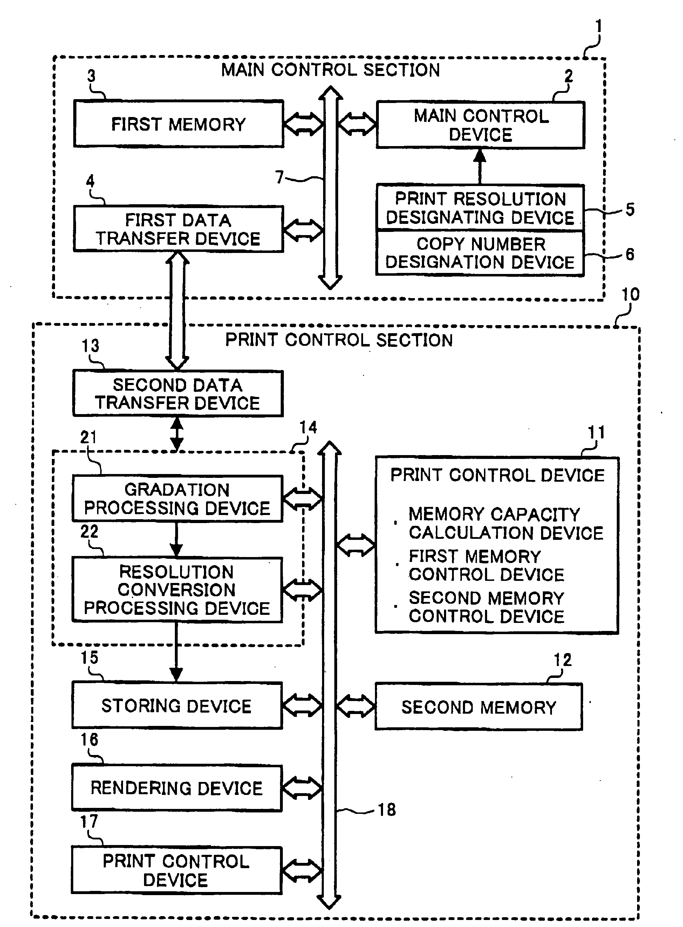

FIG. 1 illustrates an exemplary configuration of an ink jet printing apparatus according to one embodiment of the present invention.

### PREFERRED EMBODIMENTS OF THE PRESENT INVENTION

Herein below, several embodiments are described in detail with reference to the drawing. First, a configuration of an exemplary ink jet printing apparatus of one embodiment of the present invention is described. Of course, the below described embodiments do not restrict the present invention. For example, the present invention can be applied to a multifunction machine and a copier, if an image reading apparatus such as a scanner is additionally employed. The ink jet printing apparatus includes a main control unit 1 and a print control unit 10, which are mutually connected by a bus with each other. The main control unit 1 includes a main control device 2, a first memory device 3, a first data transfer device 4, a print resolution designation device 5, and a copy number designation device 6. Among those, the main control device 2, the first memory device 3, and the first data transfer device 4 are mutually connected by a bus 7 with each other.

The main control device 2 generally controls the entire ink jet printing apparatus. A function of the main control device 2 can be realized when a CPU (i.e., a microcomputer) reads and executes a prescribed program, which is stored in a memory such as a ROM. The first memory device 3 is formed from a RAM, an HDD, or the like and has a capacity to store one page of image data (i.e., a unit of printing). Image data to be stored in the first memory device 3 can be generated from data such as character code data, depiction data, etc., which is transmitted from an external apparatus such as a personal computer, not shown.

The first data transfer device 4 can be constituted by a PCI bus, and communicates image data and control data with a print control unit 10. The print resolution designating device 5 designates a printing resolution in response to an operational signal generated by an operation through an operation panel (not shown). A function of the print resolution designating device 5 can be realized when the CPU reads and executes prescribed program, which is stored in the memory. The copy number designating device 6 designates a number of copies in response to an operational signal generated by an operation through the operation panel. A function of the copy number designating device 6 can be realized when the CPU reads and executes a prescribed program, which is stored in the memory.

The print control unit 10 includes a print control device 11, a second memory device 12, a second data transfer device 13, an image processing device 14, a storing device 15, a rendering device 16, and a print control device 17. Among those, the print control device 11, the second memory device 12, the image processing device 14, the storing device 15, the rendering device 16, and the print control device 17 are mutually connected by a bus 18 with each other.

The print control device 11 includes a memory capacity calculation device, and first and second memory control devices to control the print control unit 10 to appropriately print. The first and second memory control devices control the second memory device 12. A function of the print control device 11 can be realized when the CPU reads and executes prescribed program, which is stored in the memory. The second memory device 12 is formed from a RAM, an HDD, or the like similar to the first memory device and has a capacity to store at least one page of image data (i.e., a unit of printing).

The second data transfer device 13 can be realized by a PCI bus or the like and communicates image data and control data to the main control unit 1. The image processing device 14 may include a gradation processing device 21 and a resolution conversion device 22 to apply image processing, which is suitable for printing, to image data in the unit of a page, which is transmitted from the main control unit 1 and is received by the second data transfer device 13. The gradation processing device 21 applies gradation processing to the incoming image data, which is suitable for the print engine. The resolution conversion device 22 converts a resolution of incoming image data into a prescribed level which enables the print engine to appropriately print (i.e., image formation).

The storing device 15 corresponds to a DMA (Direct Memory Access) control section, and transfers and stores image data, which has been processed by the image processing device 14, in the second memory device 12. The rendering device 16 applies rendering (i.e., reordering) to image data, which has been processed and is stored in the second memory device 12, to generate scan data which is suitable for an ink jet printing head. The print control device 17 controls the print engine to appropriately print an image on a printing medium or the like based upon the image data (i.e., scan data) having received the rendering.

In such a printing apparatus, when the print control unit 10 prints a color image based upon image data transmitted from the main control unit 1, the main control unit 1 separately transfers image data of each of four plates (e.g. CMYK) to the print control unit 10 per a plate. Specifically, when the first data transfer device 4 transfers image data from the first memory device 3, which has a capacity to store at least one page, to the print control device 11 via the main control device 2, the image data is transferred in a unit of a page per a component color, (i.e., respective plates are not simultaneously transferred) even if one page of a color image is transferred. That is, the image processing device 14 performs image processing per a component color, and stores the image data in the second memory device 12 having a capacity to store at least one page in a different timing. Accordingly, a plurality of image processing devices are not needed for respective component colors. Thus, a color image can be printed by an image processing device and a storage device each only handles one plate value as in a printing of a monochrome image. The hardware can simultaneously be downsized.

Specifically, it is enough for the print control unit 10 to apply image processing to image data of one plate value, and the image processing device only needs image processing hardware of one plate value. Further, when image data having undergone image processing is to be stored, it is enough for a storage device 15 to have only one plate value. Further, although first and second memory devices storing image data of one page (i.e., a unit of printing) are needed, an undesirable processing interval, in particular, a transfer time period of image data, can be reduced while downsizing hardware, such as an image processing device for printing, a memory device connected thereto, etc., if image data of each plate is transferred in a chronological order. Specifically, a color image can be printed by substantially the same scale device as a monochrome image.

Further, since the image processing device of the print control unit 10 includes the resolution conversion device which converts the resolution of incoming image data into a prescribed level which enables the print engine to appropriately print, image data such as facsimile data can be printed on a printing medium. Accordingly, a printing apparatus employing such an ink jet printing system can process and print image data such as facsimile data. Since the print control unit 10 employs the rendering device that applies rendering to image data, which has undergone image processing and is stored in the second memory device, to obtain scan data suitable for the ink jet printing head, a printing apparatus employing such an ink jet printing system can print image data.

Further, the print control device 11 includes a memory capacity calculation device that calculates an amount of image data (e.g. a number of pages) likely stored in the second memory device 12 in accordance with a printing resolution which is designated by the printing resolution device 5, as well as the first memory control device that controls storage of image data in the second memory device 12 in accordance with the calculation result of the memory capacity calculation device. Thus, image data to be printed on the next page can be stored (i.e., taken in) in advance in the second memory device 12 in accordance with the printing resolution and the capacity of the second memory device 12. Thus, a time period necessary for the first data transfer device to transfer image data can be minimized, and accordingly, a processing interval between printings of pages can be minimized even if the image processing device and the storage device each only handles one plate value.

Further, since the print control device 11 includes a second memory control device that repeatedly reads the same image data as needed from the second memory device when the copy number designating device 6 designates prescribed plural numbers of copies, and the image data is transferred to the print control device 17 and is printed on the printing medium in turn as is or via the rendering device 16, the same data does not need be repeatedly transferred to the first data transfer device 4. Thus, since a time period necessary when image data is transferred by the first data transfer device can be minimized, plurality numbers of copies can be printed while suppressing load on the main control unit 1. Further, even if each of an image processing device and a storage device handles only one plate value, a processing interval between printings of pages can be minimized.

Each of the image processing device 14 and the image data transfer devices 4 and 13 is formed from a circuit, and preferably has a circuit scale capable of dealing image data of the substantially one plate value.

The second memory 12 has a capacity to store image data of the substantially one page,value of the maximum resolution, the second memory 12 has accordingly a vacancy.

Then, according to one embodiment, image data of the next page or plate is stored in the second memory 12 before the previous printing is completed. Specifically, the calculation is performed to detect the vacancy based upon the capacity of the second memory 14 and resolution of the image data.

### ADVANTAGE OF THE PRESENT INVENTION

According to the present invention, an undesirable processing interval between printings of pages, in particular, an image data transfer time period, can be minimized while downsizing hardware in a printing apparatus, which prints a color image.

## Claims

1. A color printing apparatus, comprising:
a main control unit (1) including a main control device (2) configured to generally control the color printing apparatus, a first memory (3) configured to have a capacity to store at least one page of image data, and a first data transfer device (4) configured to transfer image data of different component colors per a component color plane in turn in a chronological order through a bus; and
a print control unit (10) connected to the main control unit (1) by the bus and constituted to sequentially receive the image data of the component colors per one plane by means of a second transfer unit (13);
said print control unit (10) including:
an image processing device (14) configured to process the sequentially received image data, directly incoming from the second transfer unit (13), per one plane;
a storing device (15) configured to store the image data having received the image processing in a second memory (12) configured to have a capacity to store at least one page of image data; and
a print control device (11) configured to control printing of a color image on a sheet in accordance with the processed image data.

2. The color printing apparatus, according to claim 1, wherein said image processing device (14) includes a resolution conversion device (22) configured to convert a resolution of the image data into a prescribed level before printing.

3. The color printing apparatus, according to claim 2, wherein said print control unit (10) includes a reordering device (16) configured to reorder the image data before printing.

4. The color printing apparatus, according to claim 3, wherein said main control unit (1) includes a print resolution designating device (5) configured to designate a printing resolution, and wherein said print control device (11) includes a memory capacity calculation device configured to calculate an amount of image data likely stored in the second memory (12) based upon the resolution, and a first memory control device configured to control storage of the image data in the second memory (12) in accordance with a calculation result of the memory capacity calculation device.

5. The color printing apparatus, according to claim 4, wherein the main control unit (1) includes a copy number designating device (6) configured to designate a number of copies, and wherein said print control unit (10) includes a second memory control device configured to read the same color image data from the second memory (12) as needed when the copy number designating device (6) designates prescribed plural numbers of copies.

## Patentansprüche

1. Farbdruckvorrichtung, die umfasst:
eine Hauptsteuereinheit (1) mit einer Hauptsteuervorrichtung (2), die konfiguriert ist, um die Farbdruckvorrichtung allgemein zu steuern, einem ersten Speicher (3), der so konfiguriert ist, dass er eine Kapazität besitzt, um wenigstens eine Seite von Bilddaten zu speichern, und einer ersten Datenübertragungsvorrichtung (4), die konfiguriert ist, um Bilddaten mit unterschiedlichen Komponentenfarben pro Komponentenfarbebene ihrerseits in einer chronologischen Reihenfolge über einen Bus zu übertragen; und
eine Drucksteuereinheit (2), die durch den Bus mit der Hauptsteuereinheit (1) verbunden ist und beschaffen ist, um nacheinander die Bilddaten der Komponentenfarben pro Ebene mittels einer zweiten Übertragungseinheit (13) zu empfangen;
wobei die Drucksteuereinheit (10) umfasst:
eine Bildverarbeitungsvorrichtung (14), die konfiguriert ist, um die nacheinander empfangenen Bilddaten, die direkt von der zweiten Übertragungseinheit (13) ankommen, pro Ebene zu verarbeiten;
eine Speichervorrichtung (15), die konfiguriert ist, um die Bilddaten, an denen die Bildverarbeitung ausgeführt worden ist, in einem zweiten Speicher (12) zu speichern, der so konfiguriert ist, dass er eine Kapazität besitzt, um wenigstens eine Seite von Bilddaten zu speichern; und
eine Drucksteuervorrichtung (11), die konfiguriert ist, um das Drucken eines Farbbildes auf einem Blatt in Übereinstimmung mit den verarbeiteten Bilddaten zu steuern.

2. Farbdruckvorrichtung nach Anspruch 1, wobei die Bildverarbeitungsvorrichtung (14) eine Auflösungsumsetzungsvorrichtung (22) umfasst, die konfiguriert ist, um eine Auflösung der Bilddaten vor dem Drucken in ein vorgeschriebenes Niveau umzusetzen.

3. Farbdruckvorrichtung nach Anspruch 2, wobei die Drucksteuereinheit (10) eine Umordnungsvorrichtung (16) umfasst, die konfiguriert ist, um die Bilddaten vor dem Drucken umzuordnen.

4. Farbdruckvorrichtung nach Anspruch 3, wobei die Hauptsteuereinheit (1) eine Druckauflösungs-Angabevorrichtung (5) umfasst, die konfiguriert ist, um eine Druckauflösung anzugeben, und wobei die Drucksteuervorrichtung (11) eine Speicherkapazität-Berechnungsvorrichtung, die konfiguriert ist, um eine Menge von Bilddaten, die wahrscheinlich in dem zweiten Speicher (12) gespeichert wird, anhand der Auflösung zu berechnen, und eine erste Speichersteuervorrichtung, die konfiguriert ist, um das Speichern der Bilddaten im zweiten Speicher (12) in Übereinstimmung mit dem Berechnungsergebnis der Speicherkapazität-Berechnungsvorrichtung zu steuern, umfasst.

5. Farbdruckvorrichtung nach Anspruch 4, wobei die Hauptsteuereinheit (1) eine Kopienanzahl-Angabevorrichtung (6) umfasst, die konfiguriert ist, um eine Anzahl von Kopien anzugeben, und wobei die Drucksteuereinheit (10) eine zweite Speichersteuervorrichtung umfasst, die konfiguriert ist, um nach Bedarf Bilddaten gleicher Farbe aus den zweiten Speicher (12) zu lesen, wenn die Kopienanzahl-Angabevorrichtung (6) eine vorgeschriebene Mehrzahl von Kopien angibt.

## Revendications

1. Appareil d'impression couleur, comportant :
une unité de contrôle principale (1) comprenant un dispositif de contrôle principal (2) configuré pour contrôler de façon générale l'appareil d'impression couleur, une première mémoire (3) configurée pour avoir la capacité de stocker au moins une page de données d'image, et un premier dispositif de transfert de données (4) configuré pour transférer des données d'image de différentes couleurs constitutives par plan de couleur constitutive à leur tour dans un ordre chronologique par l'intermédiaire d'un bus ; et
une unité de contrôle d'impression (10) reliée à l'unité de contrôle principale (1) par le bus et constituée pour recevoir séquentiellement les données d'image des couleurs constitutives par plan au moyen d'une seconde unité de transfert (13) ;
ladite unité de contrôle d'impression (10) comportant :
un dispositif de traitement d'image (14) configuré pour traiter les données d'image reçues séquentiellement, entrant directement depuis la seconde unité de transfert (13), par plan ;
un dispositif de stockage (15) configuré pour stocker les données d'image ayant reçu le traitement d'image dans une seconde mémoire (12) configurée pour avoir la capacité de stocker au moins une page de données d'image ; et
un dispositif de contrôle d'impression (11) configuré pour contrôler l'impression d'une image couleur sur une feuille conformément aux données d'image traitées.

2. Appareil d'impression couleur selon la revendication 1, dans lequel ledit dispositif de traitement d'image (14) comprend un dispositif de conversion de résolution (22) configuré pour convertir une résolution des données d'image en un niveau prescrit avant l'impression.

3. Appareil d'impression couleur selon la revendication 2, dans lequel ladite unité de contrôle d'impression (10) comprend un dispositif de remise en ordre (16) configuré pour remettre en ordre les données d'image avant l'impression.

4. Appareil d'impression couleur selon la revendication 3, dans lequel ladite unité de contrôle principale (1) comprend un dispositif de désignation de résolution d'impression (5) configuré pour désigner une résolution d'impression, et dans lequel ledit dispositif de contrôle d'impression (11) comprend un dispositif de calcul de capacité de mémoire pour calculer une quantité de données d'image probablement stockées dans la seconde mémoire (12) en fonction de la résolution, et un premier dispositif de contrôle de mémoire configuré pour contrôler le stockage des données d'image dans la seconde mémoire (12) conformément à un résultat de calcul du dispositif de calcul de capacité de mémoire.

5. Appareil d'impression couleur selon la revendication 4, dans lequel l'unité de contrôle principale (1) comprend un dispositif de désignation de nombre de copies (6) configuré pour désigner un nombre de copies, et dans lequel ladite unité de contrôle d'impression (10) comprend un second dispositif de contrôle de mémoire configuré pour lire les mêmes données d'image couleurs provenant de la seconde mémoire (12) en fonction des besoins lorsque le dispositif de désignation de nombre de copies (6) désigne plusieurs nombres de copies prescrits.
